# EUROPÄISCHE PATENTSCHRIFT

(11) **EP 0 720 527 B1**
(45) Veröffentlichungstag und Bekanntmachung des Hinweises auf die Patenterteilung: **19.05.1999**
(21) Anmeldenummer: 94928389.9
(22) Anmeldetag: 21.09.1994
(51) Int. Cl.: B29C 65/34, G05B 19/12, F16L 47/02

(54) **QUALITÄTSSICHERUNG BEI ELEKTROSCHWEISSBAREN VERBINDUNGSELEMENTEN**
QUALITY ASSURANCE OF ELECTRICALLY WELDABLE JOINING ELEMENTS
ASSURANCE DE LA QUALITE D'ELEMENTS DE LIAISON ELECTROSOUDABLES

(30) Priorität: 24.09.1993 CH 2890/93
(43) Veröffentlichungstag der Anmeldung: 10.07.1996
(73) Patentinhaber: WAVIN B.V., 8011 CW Zwolle (NL)
(72) Erfinder: AMACHER, Urs, CH-4556 Aeschi (CH); JEKER, Bruno, CH-4500 Solothurn (CH)
(74) Vertreter: Feldmann, Clarence Paul
(86) Internationale Anmeldenummer: EP9403158
(87) Internationale Veröffentlichungsnummer: WO9508432

(56) Entgegenhaltungen:
- EP-A- 0 230 642
- EP-A- 0 272 978
- EP-A- 0 335 010
- EP-A- 0 353 912
- EP-A- 0 462 279
- WO-A-94/08278

## Beschreibung

Die vorliegende Erfindung betrifft ein Verfahren zu einem qualitätssichernden Datenaustausch zwischen einem thermoplastischen elektroschweissbaren Verbindungselement mit einem integrierten Datenträger und externen Datenverarbeitungsgeräten.

Thermoplastische elektroschweissbare Verbindungselemente werden zur Verbindung von Rohrleitungsteilen aus thermoplastischem Kunststoff eingesetzt. Derartige Verbindungselemente sind beispielsweise Elektro-Schweissmuffen, Elektro-Schweissfittings oder Anbohrschellen.

Ein Schweissgerät liefert die für die Schweissung notwendige Energie, die sich aus den Schweissparametern Spannung, Strom und Zeitdauer zusammensetzt. Damit eine einwandfreie Schweissverbindung hergestellt werden kann, müssen diese Schweissparameter optimal auf das betreffende Verbindungselement abgestimmt sein. Um Fehler in der Einstellung der in der Schweissenergie resultierenden Schweissparameter zu vermeiden, wird das Verbindungselement mittlerweile vom Schweissgerät typenspezifisch identifiziert. Das Verbindungselement weist deshalb einen typenspezifischen Datenträger auf. Bekannte Datenträger sind Codewiderstände, Strichcodes oder passive Mikro-Chips.

Eine langfristige Qualitätsicherung erfordert eine genaue Protokollierung des Montageprozesses. Deshalb werden meist mittels dem Schweissgerät die wichtigsten Schweissdaten, wie Datum und Zeit der Schweissung, Schweissparameter, Umgebungstemperatur, Art und Durchmesser des Schweisselementes, Schweisser und laufende Nummer des Rohrverlegungsabschnittes protokolliert. Dies erfolgt jedoch getrennt vom Verbindungselement. Ein derartiges Verfahren ist aus EP-A-0'353'912 bekannt.

Die Protokolle werden in den bekannten Verfahren auf Datenbanken oder Magnetkarten gespeichert und archiviert. Eine spätere eindeutige Identifikation mit dem entsprechenden Verbindungselement ist nicht mehr gewährleistet, da dieses nur typenspezifisch erkannt werden kann. Es besteht kein direkter Zusammenhang zwischen dem Verbindungselement und den erst nachträglich abgespeicherten Verlegungsdaten.

Es ist deshalb Aufgabe der vorliegenden Erfindung, einen qualitätssichernden Datenaustausch zwischen dem Datenträger eines Verbindungselementes und externen Datenverarbeitungsgeräten aufzuzeigen, mittels dem stets eine eindeutige Identifikation des Verbindungselementes mit seinen typenspezifischen und seinen verlegungsspezifischen Daten möglich ist.

Diese Aufgabe löst ein Verfahren mit den Merkmalen des Patentanspruchs 1.

Das erfindungsgemässe Verfahren wird durch die Verwendung eines bidirektional arbeitenden Datenträgers ermöglicht, der im elektroschweissbaren Verbindungselement integriert ist. Derartige Datenträger sind beispielsweise ein Speicher IC, das heisst ein EEPROM, oder ein berührungslos les- und schreibbarer Datenträger. In diesen Datenträger werden alle für eine spätere Rückverfolgung der Geschichte des Verbindungselementes notwendigen Daten, wie Herstellungsdaten, typenspezifischen Verlegungsdaten, typenspezifischen Daten der zu verschweissenden Partner, zum Beispiel der Rohre oder Formstücke, und alle effektiven Verlegungsdaten, gespeichert. Bei einer nachträglichen Qualitatsüberprüfung oder bei Auftreten von Mangeln sind alle notwendigen Daten im dazugehörenden Verbindungselement gespeichert. Eine Verwechslung ist ausgeschlossen.

Des weiteren ist die Qualitätssicherung gewährleistet, da der Datenträger des Verbindungselementes mit einem Datenverarbeitungsgerät kommuniziert, das die mit dem Verbindungselement gekoppelten Daten auswertet und zur Steuerung des Schweissprozesses verwendet. Erst durch die wechselseitige Kommunikation ist die Qualität der Schweissung und eine spätere korrekte Rückverfolgung der Herstellung und der Verschweissung möglich.

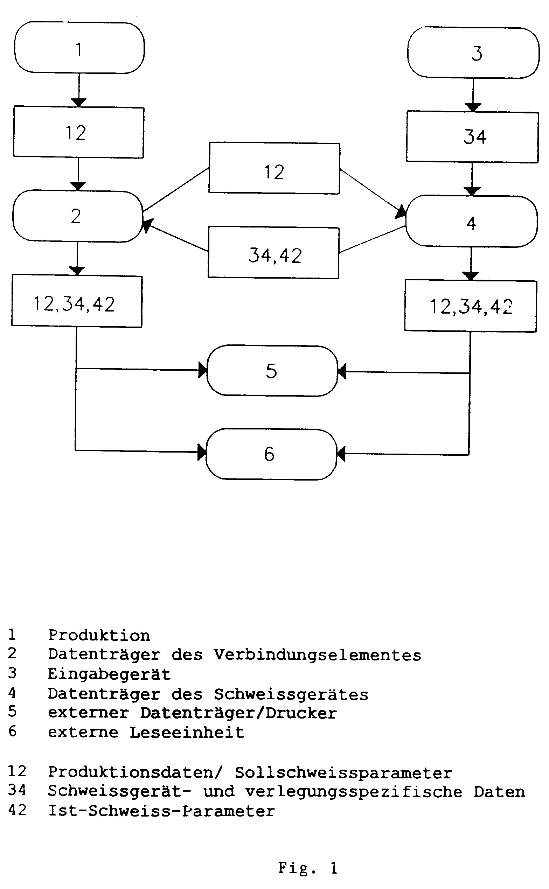

In der einzigen Zeichnung ist ein Flussdiagramm des erfindungsgemässen Verfahrens dargestellt und in der nachfolgenden Beschreibung erläutert.

Bei der Herstellung 1 des elektroschweissbaren Verbindungselementes wird ein bidirektionaler Datenträger 2 irreversibel in das Verbindungselement eingebaut. Diesem Datenträger 2 werden herstellungsspezifische Daten und für die spätere Schweissung relevanten Daten 12 übermittelt, die auf ihm abgespeichert werden. Unter die herstellungsspezifischen Daten fallen sämtliche Angaben, die für eine spätere eindeutige Rückverfolgbarkeit der Geschichte des elektroschweissbaren Verbindungselementes bis zu seiner Entstehung und der Art seiner Entstehung notwendig sind. Die Daten 12 werden teilweise automatisch, teilweise als Stammdaten eingegeben. Für die Eingabe der Daten ist ein Computer des Herstellers vorgesehen, wobei unter Computer sämtliche handelsüblichen datenverarbeitende Geräte oder Geräteteile verstanden werden. Die herstellungsspezifischen, variablen Daten werden vom Computer des Herstellers erfasst, einerseits bei ihm gespeichert und andererseits automatisch auf den Datenträger 2 des Verbindungselementes kopiert.

In diesem Beispiel werden folgende Daten 12 automatisch geschrieben: Schweisselement-Hersteller, Herstellungsort, - datum und -uhrzeit, Laufnummer des Schweisselementes, Widerstands-Kontrollwert und Durchmesser-Kontrollwert. Ueber einen Stammdatenspeicher eingegebene Daten 12 sind: nomineller Durchmesser, Elementart, Artikelnummer, Rohrserie, Produktionslos, Rohmaterial-Code und sämtliche Sollschweissparameter. Die Soll-Schweissparameter sind die Parameter, mit denen das Verbindungselement verschweisst werden sollte. Diese Parameter bestehen aus Soll-Schweissspannung und/oder Soll-Schweissstrom, Soll-Schweisszeit, Soll-Abkühlzeit und Widerstandstoleranzwert, wobei alle Daten temperaturabhängig sind. Diese Abhängigkeit wird mittels Temperaturfaktoren erfasst.

Alle vom Computer des Herstellers zum Datenträger 2 übermittelten Daten werden zu Kontrollzwecken vom Datenträger an den Computer des Herstellers übermittelt.

Jedes elektroschweissbare Verbindungselement, das seinen Fertigungsort verlässt, ist demnach mit Produktionsdaten und dessen physikalischen, für die Schweissung relevanten Daten versehen. Diese Daten 12 geben erschöpfende Auskunft über dessen Herstellung und verhindern beim späteren Verlegen des Verbindungselementes allfällige Fehler in der Steuerung der Schweiss-Parameter.

An der Verlegungsstelle werden diese elektroschweissbaren Verbindungselemente mit einem Schweissgerät verarbeitet. Des weiteren ist ein Datenverarbeitungsgerät vorhanden, das mit dem Schweissgerät und dem Datenträger des Verbindungselementes kommuniziert. In einer bevorzugten Variante ist das Datenverarbeitungsgerät ein integriertes Teil des Schweissgerätes, externe Geräte sind jedoch auch möglich.
Das Schweissgerät beziehungsweise das Datenverarbeitungsgerät weist mindestens einen Datenträger 4 auf, auf dem gerätespezifische und verlegungsspezifische Daten 34 gespeichert sind. Der Datenträger wird mittels einem Eingabegerät 3, beispielsweise einem spezifischen Eingabegerät oder einem Personal Computer, beschrieben. Der Datenträger 4 kann fest im Gerät integriert sein oder steckbar mit dem Schweissgerät koppelbar sein. In der hier dargestellten Variante wird ein Schweissgerät verwendet, das einen mobilen Steckspeicher und einen geräteintegrierten Festspeicher aufweist. Auf beiden Speichern werden je ein Teil der Daten 34 geschrieben, wobei Doppelspeicherungen nicht ausgeschlossen sind. Bevorzugterweise werden auf dem festen, ersten Speicher die schweissgerätspezifischen Daten unlöschbar gesichert und auf dem zweiten, mobilen Steckspeicher die variablen Schweissdaten archiviert.

Die zu speichernden gerätespezifischen Daten beziehen sich auf das jeweilige Schweissgerät. Beispiele sind Herstellerfirma des Gerätes, Gerätetyp und -nummer, Datum der Inbetriebnahme und Anzahl der bereits durchgeführten Schweissungen. Die verlegungsspezifischen, variablen Daten beziehen sich auf die konkrete Verlegung des elektroschweissbaren Verbindungselementes. Beispiele für diese Daten sind Verlegungsfirma, Name oder Code des Schweissers, Verschweissdatum und -uhrzeit, Baustelle, Baustellenabschnitt, Satellitenortungskoordinaten, Schweisspartner, Umgebungstemperatur, Ist-Schweissparameter und Fehlermeldungen. Ein Teil dieser Daten wird über ein spezifisches Eingabegerät vor Ort eingegeben. Andere Daten, wie die Ist-Schweissparameter, Fehlermeldungen und Umgebungstemperatur werden erst im Verlaufe des Schweissprozesses erhalten und direkt schweissgerätintern an den Datenträger weitergeleitet. Diese Daten werden ebenfalls an den Datenträger des Verbindungselementes übermittelt. Bei Verwendung eines externen Datenverarbeitungsgerätes erfolgt die Uebermittlung der Daten bevorzugterweise über denselben.

Alle dem Datenträger des Verbindungselementes übermittelten Daten werden zu Kontrollzwecken wieder an das Datenverarbeitungsgerät zurückübermittelt.

Als weitere Sicherung zur Vermeidung von Fehlern beim Verschweissen der Verbindungselemente findet im Schweissgerät eine Abfrage der Benützungsberechtigung statt. Dabei werden beispielsweise am Verlegungsort eingegebene Identifikationsdaten mit dem bereits gespeicherten Code des Schweissers verglichen. Die Eingabe der Identifikationsdaten erfolgt über einen elektronisch gesicherten Speicherschlüssel, der vor dem Schweissprozess mit dem Schweissgerät gekoppelt wird.

Wird an der Verlegungsstelle der Kontakt zwischen elektroschweissbarem Verbindungselement und Schweissgerät hergestellt, so werden die im Datenträger 2 des Verbindungselementes gespeicherten Daten 12 an den Datenträger 4 des Schweissgerätes übermittelt. Diese Datenübermittlung wie auch die später beschriebenen Datentransfers können über eine Datenleitung oder berührungslos erfolgen.

Vor dem Schweissprozess wird die Umgebungstemperatur gemessen. In einer Variante des Verfahrens wird die Temperatur durch einen mit dem Schweissgerät gekoppelten Temperaturfühler erfasst, so dass der gemessene Temperaturwert vom Schweissgerät an die Datenträger 2,4 übermittelt wird. In einer anderen Variante erfolgt die Temperaturmessung über einen Temperaturfühler, der im Verbindungselement integriert ist und seine Messdaten an den Datenträger 2 des Verbindungselementes weiterleitet.

Für eine spätere qualitätssichernde Nachforschung oder zu statistischen Zwecken lassen sich über das Eingabegerät alle relevanten Daten der zu verschweissenden Partner in den Speicherelementen (2,4) ablegen. In diesem Beispiel sind das Hersteller, Rohmaterial-Code, Produktionslos, Elementart und Rohrserie. Die Kennzeichnung der zu verschweissenden Partner erfolgt zum Beispiel über ein auf den Partnern angebrachter Strichcode oder Zahlencode.

Ebenfalls vor dem Schweissprozess werden die für die Schweissung relevanten Daten, insbesondere die Soll-Schweissparameter, von, Datenträger 2 des Verbindungselementes dem Schweissgerät übermittelt. Dieses verarbeitet die gelieferten Daten und stellt entsprechend der gemessenen Temperatur die erforderliche Schweissenergie ein. Das heisst, das Datenverarbeitungsgerät wertet ausgesuchte Daten aus und verwendet diese zur Steuerung der Hardware des Schweissgerätes. Die Schweissung beginnt. Treten im Verlauf des Schweissprozesses Fehlermeldungen auf, so werden diese an beide Datenträger 2,4, das heisst an denjenigen im Schweissgerät oder Datenverarbeitungsgerät and an denjenigen im Verbindungselement, übermittelt. Ebenso wird die effektiv gelieferte Schweissleistung, das heisst Spannung und Strom, als Funktion der Zeit registriert. Diese Daten 42 werden während und nach dem Schweissvorgang ebenfalls in den zwei Datenträgern 2,4 gespeichert.

Eine genaue Auflistung der übermittelten Daten in dieser Variante ist in folgender Tabelle ersichtlich. Bidirektionale Pfeile weisen auf einen bidirektionalen Datentransfer hin. Die Kreise kennzeichnen den Ort der Speicherung.

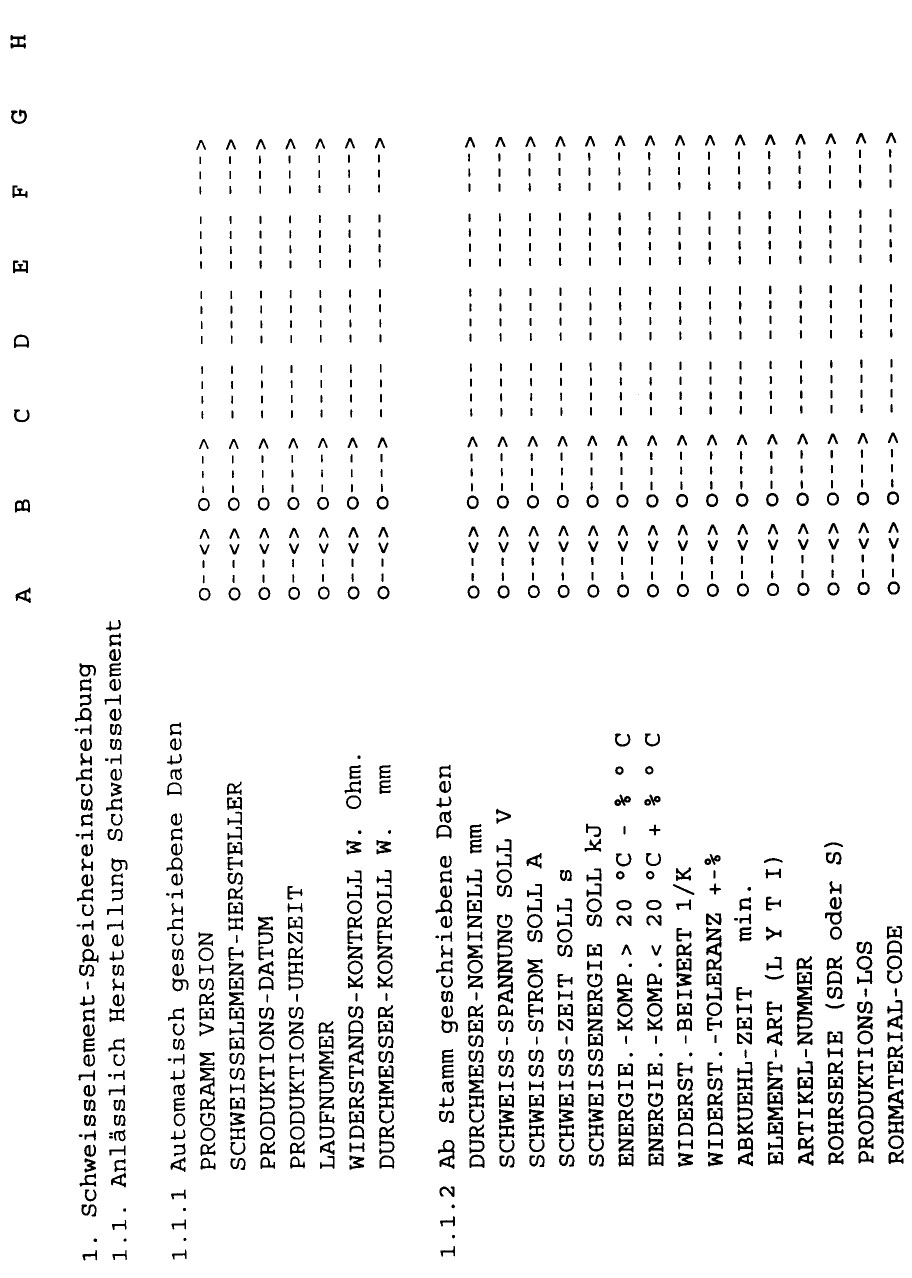

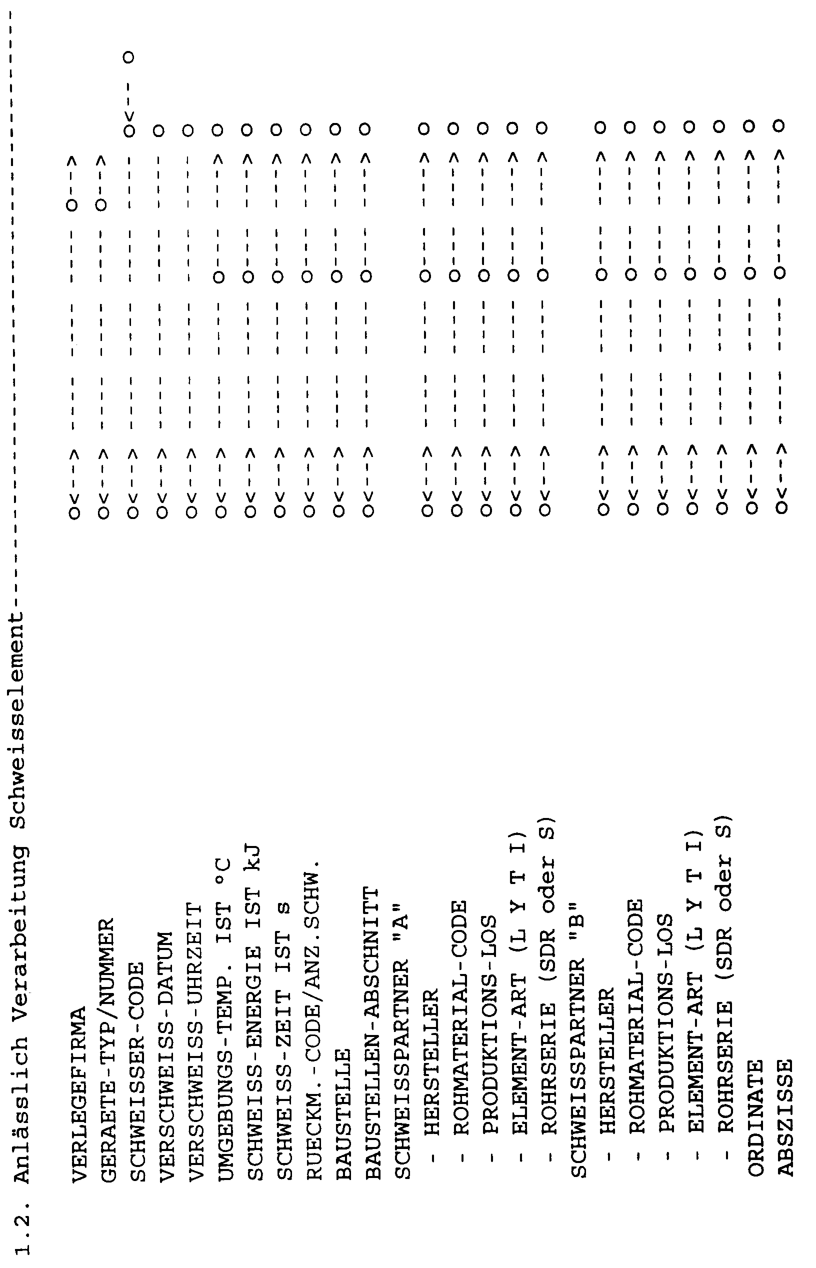

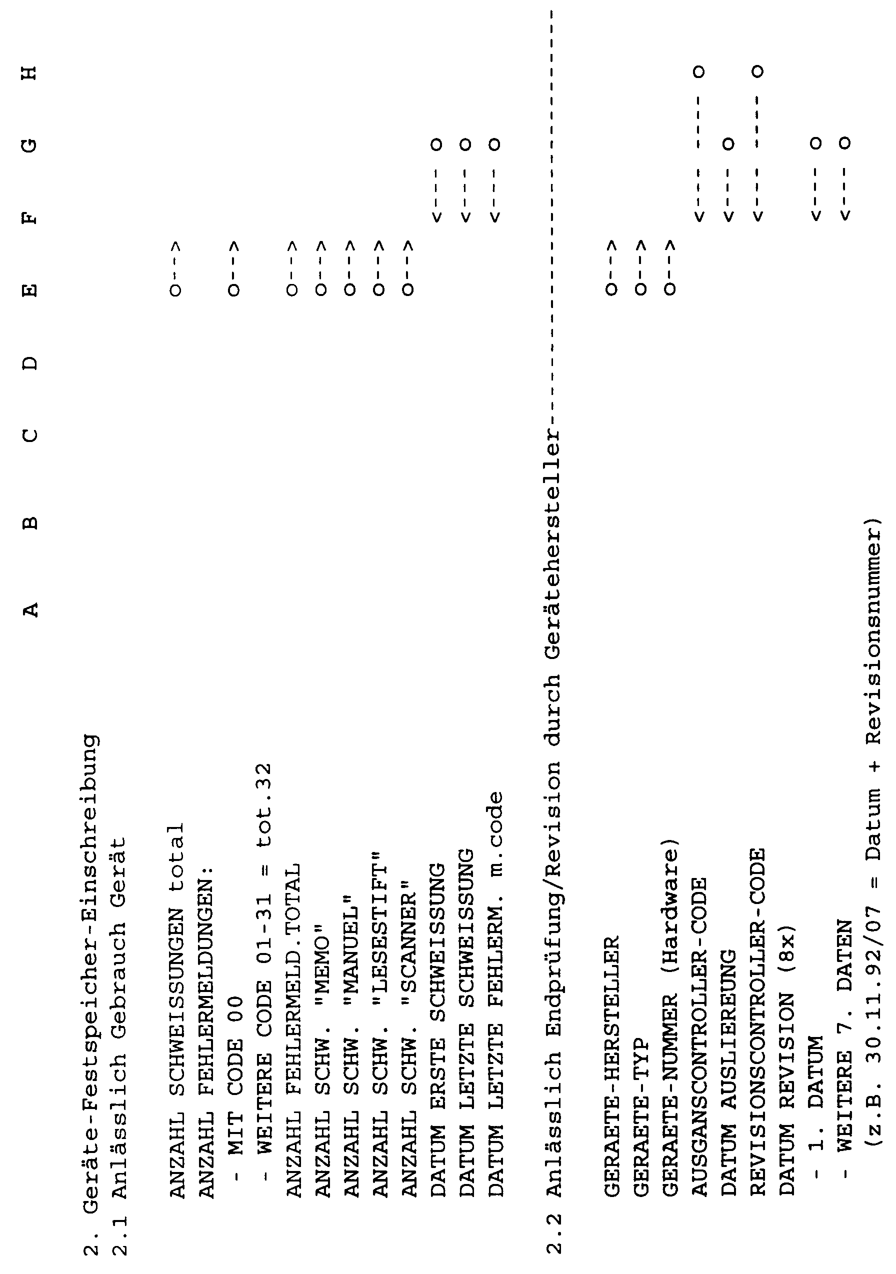

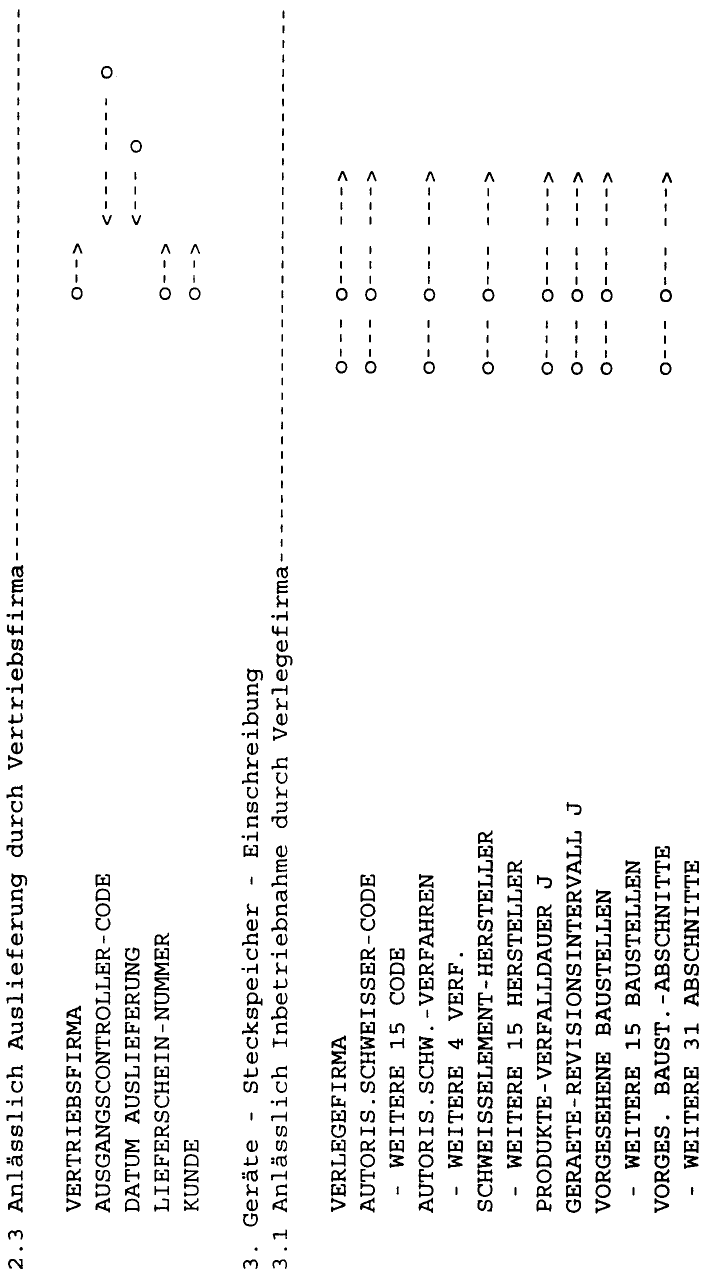

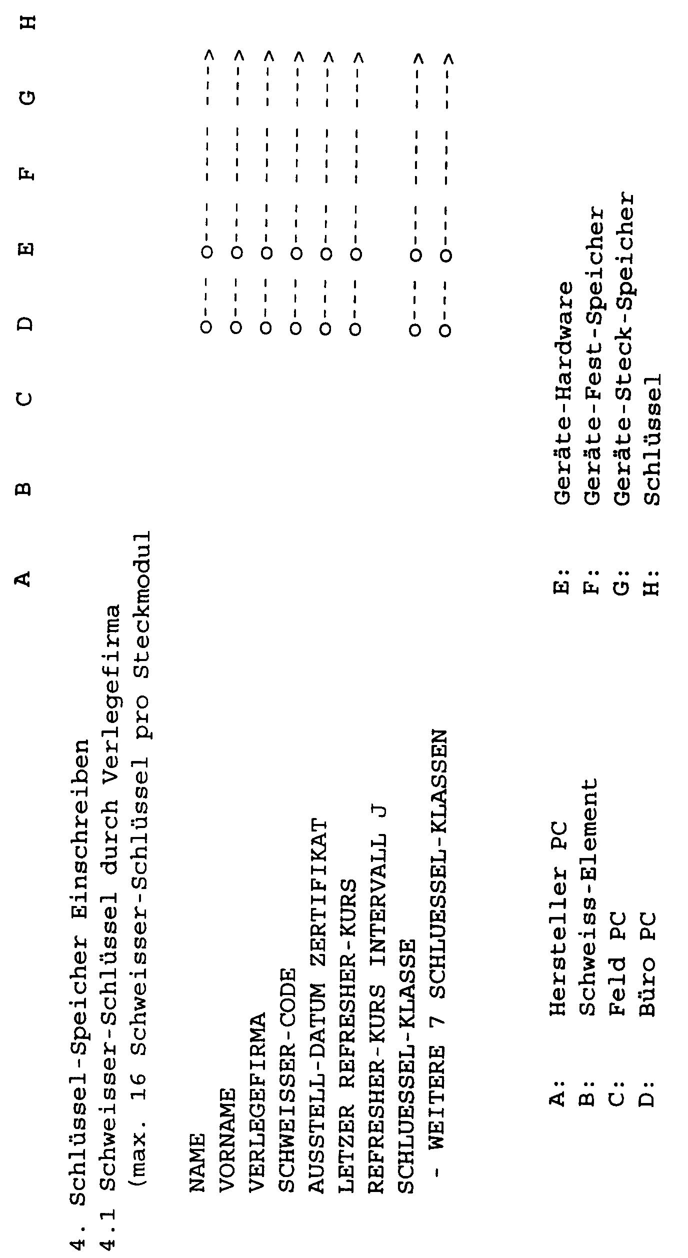

Nach Beendigung des Schweissprozesses und der Abkühlungsphase sind somit alle Daten 12,34,42 gespeichert, die für eine spätere, für die Qualitätssicherung wichtige Rückverfolgbarkeit notwendig sind. Die Daten sind mehrfach vorhanden; einerseits im Datenträger 2 des verlegten Verbindungselementes, was eine eindeutige Identifikation der Daten mit dem dazugehörenden Verbindungselement gewährleistet. Die im Datenträger 2 des Verbindungselementes gespeicherten Daten sind zudem jederzeit durch externe Datenverarbeitungsgeräte 5 oder Leseeinheiten 6 abrufbar. Andererseits sind dieselben Daten auch im Datenträger 4 des Schweissgerätes gespeichert, wobei Daten, die für eine eindeutige Identifikation und die Rückverfolgung nur eine sekundäre Rolle spielen, auch nur in einem der zwei Datenträger gespeichert werden können.

Abschliessend wird eine Uebertragung der Daten auf einen externen Datenträger 5 durchgeführt oder die Daten werden direkt über einen Drucker ausgeschrieben, um sie so zu archivieren und/oder auszuwerten.

Ist es zu einem späteren Zeitpunkt notwendig, die gespeicherten Daten einzusehen, so können diese sowohl vom Datenträger im verlegten Verbindungselement wie im Schweissgerät von einer Leseeinheit 6 gelesen werden. Die Art der Datenuebertragung ist je nach Ausführungsform verschieden. Bei der Datenübertragung vom Verbindungselement ist je nach verwendetem Datenträger eine drahtlose Uebertragung möglich.

Auch beim Schweissgerät sind verschiedene Möglichkeiten gegeben. Dieses kann, wie bereits erwähnt, sowohl einen Datenträger in Form eines mobilen Steckspeichers wie auch einen Datenträger in Form eines Festspeichers aufweisen. Wird ein Steckspeicher eingesetzt, so ist es möglich, dass der Datenträger 4 aus dem Schweissgerät entnommen wird und die Daten mittels einem zusätzlichen Lesegerät 6 abgerufen werden.

Das beim Verfahren verwendete Schweissgerät kann auch bei Verbindungselementen eingesetzt werden, die keinen bidirektional arbeitenden Datenträger aufweisen, sondern Datenträger in Form von Magnetkarten, Barcodestreifen oder gar keine Datenträger besitzen. Die für die Qualitätssicherung wichtigen verlegungsspezifischen Daten und die Ist-Schweissparameter werden nicht mehr im Datenträger des Verbindungselementes gespeichert. Die für eine allfällige spätere Rückverfolgung wichtigen Informationen fliessen nur von dem zum Schweissgerät gehörenden Datenträger 4 zu externen Datenverarbeitungsgeräten. Dadurch ist aber ein Risikofaktor vorhanden, da diese Daten nicht mehr eindeutig dem Verbindungselement zugeordnet werden können. Hingegen ist die Verarbeitbarkeit, das heisst, die korrekte Schweissung des Verbindungselementes so auch mit demselben Schweissgerät gewährleistet.

## Patentansprüche

1. Verfahren zu einem qualitätssichernden Datenaustausch zwischen einem thermoplastischen elektroschweissbaren Verbindungselement mit einem bidirektional arbeitenden Datenträger (2) und einem externen Datenverarbeitungsgerät gekennzeichnet dadurch
a) dass ermittelte von einem Computer eines Herstellers erfasste variable Daten dort gespeichert und auf den Datenträger (2) des elektroschweissbaren thermoplastischen Verbindungselementes kopiert werden;
b) dass feste vorbekannte Daten vom Computer des Herstellers auf den Datenträger (2) des Verbindungselementes kopiert werden;
c) dass alle in den Schritten a) und b) vom Computer des Herstellers zum Datenträger (2) übermittelten Daten zu Kontrollzwecken vom Datenträger (2) an den Computer des Herstellers übermittelt werden;
dass anlässlich der Verarbeitung des Verbindungselementes die nachfolgenden Schritte erfolgen:
d) Uebermittlung von die Schweissung beeinflussenden festen Stammdaten der Verarbeitung, insbesondere Daten betreffend der beiden durch das Verbindungselement zu verbindenden Partnern, und Uebermittlung von die Schweissung beeinflussenden variablen Daten vom Datenverarbeitungsgerät an den Datenträger des Verbindungselementes;
e) Uebermittlung beziehungsweise Rückübermittlung der in den Schritten a) bis d) gespeicherten Daten vom Datenträger (2) des Verbindungselementes an das Datenverarbeitungsgerät vor dem Schweissvorgang;
f) Auswertung von ausgesuchten Daten mittels des Datenverarbeitungsgerätes und Verwendung dieser Daten zur Steuerung einer Hardware eines Schweissgerätes zwecks Schweissung des Verbindungselementes;
g) Erfassung und Speicherung von effektiven Schweissdaten und allfälligen Fehlermeldungen während und nach dem Schweissprozess durch das Datenverarbeitungsgerät und Uebermittlung der Daten an den Datenträger des Verbindungselementes;
h) Rücksicherung der Daten aus dem Speicher des Datenverarbeitungsgerätes in einen externen Datenträger.

2. Verfahren nach Anspruch 1, dadurch gekennzeichnet, dass die schweissgerätspezifischen Daten unlöschbar in einem ersten Speicher und die variablen Schweissdaten in einem zweiten Speicher des Datenverarbeitungsgerätes gespeichert werden.

3. Verfahren nach Anspruch 1, dadurch gekennzeichnet, dass das Datenverarbeitungsgerät im Schweissgerät integriert ist.

4. Verfahren nach Anspruch 1, dadurch gekennzeichnet, dass die effektiven Schweissdaten durch Eingabe der Daten eines Verarbeiters und des Verarbeitungsortes in einen Speicher des Datenverarbeitungsgerätes ergänzt werden.

5. Verfahren zu einem qualitätssichernden Datenaustausch zwischen einem thermoplastischen elektroschweissbaren Verbindungselement mit einem bidirektional arbeitenden Datenträger (2) und externen Datenverarbeitungsgeräten (4,5,6) gekennzeichnet durch folgende Schritte
a) Einlesen aller für eine Rückverfolgung benötigten Produktionsdaten des elektroschweissbaren Verbindungselementes und dessen physikalischen, anlässlich der Fertigung festgelegten und für die Schweissung relevanten Daten (12) in den Datenträger (2) des Verbindungselementes,
b) Uebertragung der für die Schweissung relevanten Daten vom Datenträger (2) des Verbindungselementes an ein datenverarbeitendes Schweissgerät mit mindestens einem Datenträger (4) vor dem Schweissvorgang,
c) Uebertragung von schweissgerät- und verlegungs-spezifischen Daten (34,42) vom Schweissgerät an den Datenträger (2) des Verbindungselementes während und nach dem Schweissvorgang,
d) Abruf der gesammelten Daten mindestens einer der Datenträger (2,4) nach erfolgter Schweissung und Weitergabe an ein elektronisches Datenverarbeitungsgerät (5,6),
e) Archivierung und/oder Auswertung der abgerufenen Daten.

6. Verfahren nach einem der Ansprüche 1 oder 5, dadurch gekennzeichnet, dass die am Verbindungselement herrschende Temperatur erfasst und an das Schweissgerät übermittelt wird.

7. Verfahren nach Anspruch 6, dadurch gekennzeichnet, dass die Uebermittlung über den Datenträger im Verbindungselement erfolgt.

8. Verfahren nach Anspruch 6, dadurch gekennzeichnet, dass auf Grund der übermittelten Temperaturangabe im Schweissgerät die für die Schweissung erforderlichen Daten angepasst werden und diese dem Datenträger des Verbindungselementes übertragen werden.

9. Verfahren nach einem der Ansprüche 1 oder 5, dadurch gekennzeichnet, dass die im Datenträger des Schweissgerätes beziehungsweise Datenverarbeitungsgerätes und/oder im Datenträger des Schweisselementes erfassten Daten jederzeit von einem externen Datenverarbeitungsgerät abrufbar sind.

10. Verfahren nach einem der Ansprüche 1 oder 5, dadurch gekennzeichnet, dass vor dem Datenaustausch vom Schweissgerät beziehungsweise Datenverarbeitungsgerät an den Datenträger des Verbindungselementes das Schweissgerät beziehungsweise Datenverarbeitungsgerät mit Angaben bezüglich Verlegungsort und -zeit, mit relevanten Daten der zu verschweissenden Partnern und mit Identifikationsdaten der die Schweissung durchführenden Firma und/oder Person gespiesen wird.

11. Verfahren nach Anspruch 10, dadurch gekennzeichnet, dass Identifikationsdaten mittels eines elektronisch gesicherten Speicherschlüssels eingegeben werden.

12. Verfahren nach Anspruch 10, dadurch gekennzeichnet, dass der Verlegungsort des Verbindungselementes über Satellitenortung automatisch eingegeben wird.

13. Verfahren nach einem der Ansprüche 1 oder 5, dadurch gekennzeichnet, dass die am Schweissgerät beziehungsweise Datenverarbeitungsgerät anliegenden Daten ausgedruckt werden.

14. Verfahren nach Anspruch 5, dadurch gekennzeichnet, dass der mindestens eine Datenträger des Schweissgerätes entnommen und einem Archiv zugeführt wird.

## Claims

1. A method for a quality-assuring data exchange between a thermoplastic electro-weldable connection element with a bidirectionally functioning data carrier (2) and with an external data processing apparatus, characterised in
a) that evaluated variable data acquired by a computer of a manufacturer is stored here and is copied onto the data carrier (2) of the electro-weldable thermoplastic connection element;
b) that fixed preknown data is copied from the computer of the manufacturer to the data carrier (2) of the connection element;
c) that all data transmitted from the computer of the manufacturer to the data carrier (2) in the steps a) and b) for control purposes is transmitted to the computer of the manufacturer;
that on the occasion of the treatment of the connection element the subsequent steps are effected:
d) the transmission of fixed master data of the treatment, which influences the welding, in particular data concerning the two partners to be connected by the connection element, and the transmission of the variable data influencing the welding, from the data processing apparatus to the data carriers of the connection element;
e) the transmission or return transmission of the data stored in steps a) to d) from the data carrier (2) of the connection element to the data processing apparatus before the welding procedure;
f) the evaluation of selected data by way of the data processing apparatus and the use of this data for control of hardware of a welding apparatus for the purpose of welding the connection element;
g) the acquisition and storage of effective welding data and any occuring error messages during and after the welding process by the data processing apparatus and the transmission of the data to the data carriers of the connection element;
h) the backing up of the data from the memory of the data processing apparatus into an external data carrier.

2. A method according to claim 1, characterised in that the data specific to the welding apparatus is undeletably stored in a first memory and the variable welding data is stored in a second memory of the data processing apparatus.

3. A method according to claim 1, characterised in that the data processing apparatus is integrated in the welding apparatus.

4. A method according to claim 1, characterised in that the effective welding data is supplemented by input of the data of a treater and location of treatment into a memory of the data processing apparatus.

5. A method for a quality-assuring data exchange between a thermoplastic electro-weldable connection element with a bidirectionally functioning data carrier (2) and external data processing apparatus (4, 5, 6), characterised by the following steps
a) the reading in of all production data, necessary for a retracing, of the electro-weldable connection element and its physical data (12) which are fixed on the occasion of manufacture and which are relevant for the welding, into the data carrier (2) of the connection element,
b) the transmission of data relevant to the welding from the data carrier (2) of the connection element to a data-processing welding apparatus with at least one data carrier (4), before the welding procedure,
c) the transmission of data (34, 42) specific to the welding apparatus and to the laying, from the welding apparatus to the data carrier (2) of the connection element, during and after the welding procedure,
d) the calling up of the collected data of at least one of the data carriers (2, 4) after the welding has been effected and the passing on to electronic data processing apparatus (5, 6),
e) the archiving and/or evaluation of the called-up data.

6. A method according to one of the claims 1 or 5, characterised in that the temperature prevailing at the connection element is acquired and is transmitted to the welding apparatus.

7. A method according to claim 6, characterised in that the emission is effected via the data carrier in the connection element.

8. A method according to claim 6, characterised in that on account of the transmitted temperature detail, in the welding apparatus the data necessary for the welding is adapted and this is transmitted to the data carrier of the connection element.

9. A method according to one of the claims 1 or 5, characterised in that the data acquired in the data carrier of the welding apparatus or of the data processing apparatus and/or in the data carrier of the welding element maybe called up at any time from external data processing apparatus.

10. A method according to one of the claims 1 or 5, characterised in that before the data exchange from the welding apparatus or the data processing apparatus to the data carrier of the connection element the welding apparatus or the data processing apparatus is fed with details with respect to the laying location and laying time, with relevant data of the partners to be welded and with identification data of the company and/or person carrying out the welding.

11. A method according to claim 10, characterised in that identification data is inputted by way of an electronically stored memory key.

12. A method according to claim 10, characterised in that the laying location of the connection element is automatically inputted via satellite positioning.

13. A method according to one of the claims 1 or 5, characterised in that the data prevailing at the welding apparatus or data processing apparatus is printed out.

14. A method according to claim 5, characterised in that the at least one data carrier of the welding apparatus is removed and supplied to an archive.

## Revendications

1. Procédé pour la transmission de données assurant la qualité entre un élément de liaison thermoplastique électrosoudable ayant un support (2) de données fonctionnant de manière bidirectionnelle et un appareil externe de traitement des données caractérisé
a) en ce que les données variables fournies saisies par un ordinateur d'un fabricant y sont mises en mémoire et sont copiées sur le support (2) de données de l'élément de liaison thermoplastique électrosoudable,
b) en ce que des données fixes préalablement connues sont copiées de l'ordinateur du fabricant sur le support (2) de données de l'élément de liaison,
c) en ce que au cours des étapes a) et b) les données transmises par l'ordinateur du fabricant au support (2) de données sont transmises par le support (2) de données à l'ordinateur du fabricant à des fins de contrôle,
en ce qu'à la suite du traitement de l'élément de liaison, les étapes suivantes ont lieu:
d) transmission des données de base fixes du traitement qui influencent le soudage, en particulier les données concernant les deux partenaires à relier par l'élément de liaison, et transmission des données variables qui influencent le soudage de l'appareil de traitement des données au support de données de l'élément de liaison,
e) transmission ou, le cas échéant, transmission en retour des données mises en mémoire au cours des étapes a) à d) du support (2) de données de l'élément de liaison à l'appareil de traitement des données avant le processus de soudage,
f) évaluation des données choisies au moyen de l'appareil de traitement des données et utilisation des données pour piloter un matériel d'un appareil de soudage afin de souder l'élément de liaison,
g) saisie et mise en mémoire des données effectives de soudage et des messages d'erreur éventuels pendant et après le processus de soudage par l'appareil de traitement des données et transmission des données au support de données de l'élément de liaison,
h) sauvegarde des données provenant de la mémoire de l'appareil de traitement des données sur un support de données externe.

2. Procédé selon la revendication 1, caractérisé en ce que les données spécifiques à l'appareil de soudage sont stockées de manière ineffaçable dans une première mémoire et les données de soudage variables sont stockées dans une deuxième mémoire de l'appareil de traitement des données.

3. Procédé selon la revendication 1, caractérisé en ce que l'appareil de traitement des données est intégré dans l'appareil de soudage.

4. Procédé selon la revendication 1, caractérisé en ce que les données de soudage effectives peuvent être complétées par l'introduction des données d'un opérateur et du lieu d'opération dans une mémoire de l'appareil de traitement des données.

5. Procédé pour la transmission de données assurant la qualité entre un élément de liaison thermoplastique électrosoudable ayant un support (2) de données fonctionnant de manière bidirectionnelle et des appareils externes de traitement des données (4, 5, 6) caractérisé par les étapes suivantes
a) encodage de toutes les données de production de l'élément de liaison électrosoudable nécessaires pour un suivi et de ses données (12) physiques, déterminées lors de la fabrication et pertinentes pour le soudage, sur le support (2) de données de l'élément de liaison,
b) transmission des données pertinentes pour le soudage du support (2) de données de l'élément de liaison à un appareil de soudage traitant les données comprenant au moins un support (4) de données, avant le processus de soudage,
c) transmission des données spécifiques (34, 42) à l'appareil de soudage et au transfert de l'appareil de soudage au support (2) de données de l'élément de liaison pendant et après le processus de soudage,
d) appel des données collectées par au moins un support (2, 4) de données après achèvement du soudage et transmission à un appareil de traitement électronique (5, 6) des données,
e) archivage et / ou évaluation des données appelées.

6. Procédé selon une des revendications 1 ou 5, caractérisé en ce que la température ambiante est détectée au niveau de l'élément de liaison et transmise à l'appareil de soudage.

7. Procédé selon la revendication 6, caractérisé en ce que la transmission est faite par le support de données dans l'élément de liaison.

8. Procédé selon la revendication 6, caractérisé en ce que sur la base de l'indication de température transmise à l'appareil de soudage, les données nécessaires pour le soudage sont adaptées et celles-ci sont transmises au support de données de l'élément de liaison.

9. Procédé selon une des revendications 1 ou 5, caractérisé en ce que les données saisies sur le support de données de l'appareil de soudage ou, le cas échéant, de l'appareil de traitement des données et / ou sur le support de sonnées de l'élément de soudage peuvent être appelées à tout moment par un appareil externe de traitement des données.

10. Procédé selon une des revendications 1 ou 5, caractérisé en ce qu'avant la transmission des données de l'appareil de soudage ou, le cas échéant, de l'appareil de traitement des données au support de données de l'élément de liaison, il est fourni à l'appareil de soudage ou, le cas échéant, à l'appareil de traitement des données des indications relatives au lieu de transfert et au temps de transfert, des données pertinentes des partenaires à souder et des données d'identification de la firme et / ou de la personne effectuant le soudage.

11. Procédé selon la revendication 10, caractérisé en ce que les données d'identification sont introduites au moyen d'une clé de mémoire protégée électroniquement.

12. Procédé selon la revendication 10, caractérisé en ce que le lieu de transfert de l'élément de liaison est introduit automatiquement par repérage par satellite.

13. Procédé selon une des revendications 1 ou 5, caractérisé en ce que les données se trouvant dans l'appareil de soudage ou, le cas échéant, dans l'appareil de traitement des données peuvent être imprimées.

14. Procédé selon la revendication 5, caractérisé en ce qu'au moins un support de données de l'appareil de soudage peut être enlevé et placé dans des archives.
